# EUROPÄISCHE PATENTANMELDUNG

(11) **EP 0 693 448 A2**
(43) Veröffentlichungstag der Anmeldung: **24.01.1996**
(21) Anmeldenummer: 95108825.1
(22) Anmeldetag: 08.06.1995
(51) Int. Cl.: B65H 20/06, B65H 23/04, B29D 30/38

(54) **Automatische Cordbandübergabevorrichtung**

(30) Priorität: 19.07.1994 DE 4425417
(71) Anmelder: Karl Eugen Fischer GmbH Maschinenfabrik, D-96224 Burgkunstadt (DE)
(72) Erfinder: Holzmann, Heinrich, D-96272 Hochstadt a.M. (DE); Kunig, Rainer, D-96224 Burgkunstadt (DE)
(74) Vertreter: Matschkur, Götz, Lindner Patent- und Rechtsanwälte

(57) **Zusammenfassung**

Vorrichtung zur automatischen Übergabe eines Bandes, insbesondere eines Cordbandes, von einer Auswickelstation zu einer ein Förderband umfassenden Vorschubstation, mit einem schräg verlaufenden Übergabeförderband, das aus einer unter die Vorschubstation eingeschobenen Nichtgebrauchsstellung parallel zu seiner Förderrichtung nach oben unter die das Band tragende Ausgabewalze der Auswickelstation verfahrbar und in dieser ausgefahrenen Stellung mit seinem unteren Ende nach oben in eine Übergabestellung zum Förderband der Vorschubstation schwenkbar ist.

## Beschreibung

Die Erfindung bezieht sich auf eine Vorrichtung zur automatischen Übergabe eines Bandes, insbesondere eines Cordbandes, von einer Auswickelstation zu einer ein Förderband umfassenden Vorschubstation.

Im Zuge der Verarbeitung von Cordbändern zu Autoreifen muß wenigstens einmal das Cordband in einer Schneidvorrichtung in Streifen zerteilt werden, wobei diese meist schräg geschnittenen Streifen anschließend in anderer Zuordnung wieder zusammengespleißt werden. In all diesen Fällen, unabhängig davon, ob es sich um Stahlcordband oder Textilcordband handelt, wird eine Cordbandrolle in einer Auswickelstation eingehängt und von dort zu einer meist ein Förderband umfassenden Vorschubstation geführt, der dann die Schneidvorrichtung und weitere Verarbeitungsvorrichtungen nachgeschaltet sind. Die Übergabe von der Auswickelstation zur Vorschubstation erfolgt bisher grundsätzlich manuell, wobei meist zwei Arbeiter das Band von der Ausgabewalze der Auswickelstation herunterziehen, um es in die Vorschubstation einzufädeln. Dieses Verfahren ist nicht nur sehr zeit- und arbeitsaufwendig und damit auch teuer, sondern es hat zudem auch noch den Nachteil, daß die vor der Verarbeitung sehr weichen und wenig formstabilen Cordbänder bei den notwendigerweise punktuellen Beanspruchungen, wenn sie von Hand abgezogen werden, sich sehr stark verformen, so daß große Ausschußlängen in Kauf genommen werden müssen.

Der Erfindung liegt daher die Aufgabe zugrunde, eine Vorrichtung zur automatischen Übergabe des Bandes von einer Auswickelstation zu einer Vorschubstation zu schaffen, bei der das Band überhaupt nicht mehr von Hand berührt werden muß.

Zur Lösung dieser Aufgabe ist eine derartige Vorrichtung erfindungsgemäß gekennzeichnet durch ein schräg verlaufendes Übergabeförderband, das aus einer unter die Vorschubstation eingeschobenen Nichtgebrauchsstellung parallel zu seiner Förderrichtung nach oben unter die das Band tragende Ausgabewalze der Auswickelstation verfahrbar und in dieser ausgefahrenen Stellung mit seinem unteren Ende nach oben in eine Übergabestellung zum Förderband der Vorschubstation schwenkbar ist.

Durch die erfindungsgemäße Anordnung, die sehr einfach und funktionssicher aufgebaut werden kann, braucht man lediglich den Antrieb der Auswickelstation einzuschalten, so daß das dann über die Ausgabewalze herunterhängende Cordband auf das Übergabeförderband gelangt und von diesem - noch dazu begünstigt durch die klebrige Haftung von Cordbändern auf jeglichen Unterlagen - sauber und verziehungsfrei abgenommen und an die Vorschubstation übergeben wird. Um dabei zu verhindern, daß das Band rückwärts eingezogen wird, kann dabei unter der Ausgabewalze der Auswickelstation ein, einer Abschalteinrichtung für den Antrieb der Auswickelstation zugeordneter Detektor für das Band vorgesehen sein. Sobald dieser Detektor anspricht und anzeigt, daß das Band nicht vorwärts in Transportrichtung des Übergabeförderbandes auf dieses aufgelaufen ist, sondern rückwärts in den Spalt zwischen Ausgabewalze und Übergabeförderband hineingelangt ist, wird der Antrieb der Auswickelstation ausgeschaltet, so daß dann das Übergabeförderband, welches weiterläuft, das in falscher Richtung eingezogene Förderband zurückholt und so die Störung beseitigt. Sobald das Cordband wieder aus dem Bereich unter der Ausgabewalze sich herausbewegt hat, gibt der Detektor den Antrieb für die Auswickelstation wieder frei.

Die Ausbildung der erfindungsgemäßen Vorrichtung ist dabei mit besonderem Vorteil so getroffen, daß mit der Verschwenkung des unteren Endes des Übergabeförderbandes eine getriebliche Verbindung mit dem Antrieb des Förderbandes der Vorschubstation erfolgt, insbesondere in der Weise, daß die untere Umlenkwalze des Übergabeförderbandes wenigstens ein Zahnrad trägt, das beim Verschwenken des unteren Endes kämmend in ein mit dem Förderbandantrieb verbundenes Gegenzahnrad eingreift. Auf diese Art und Weise erspart man sich jeglichen gesonderten Antrieb für das Übergabeförderband, was nicht nur eine Einsparung eines entsprechenden Antriebsmotors bedeutet, sondern insbesondere auch die Frage der Synchronität zwischen dem Übergabeförderband und dem Förderband der Vorschubstation gegenstandslos wird.

Die Verschiebung des Übergabeförderbandes läßt sich sehr einfach in der Weise bewerkstelligen, daß dieses ja selbst antriebslos ausgestaltete Übergabeförderband in einem Schieberahmen gelagert ist, der seinerseits zwischen zwei seitlichen Säulen schräg verschiebbar geführt ist, wobei bevorzugt der Schieberahmen wenigstens eine mit einem Abtriebszahnrad eines in einer Säule eingebauten Antriebsmotors kämmende Zahnstange aufweist.

Schließlich liegt es auch noch im Rahmen der Erfindung, zum Ausschwenken des Übergabeförderbandes am unteren Ende in die Übergabestellung zur Vorschubstation hydraulische Ausschubeinrichtungen vorzusehen.

Weitere Vorteile, Merkmale und Einzelheiten der Erfindung ergeben sich aus der nachfolgenden Beschreibung eines Ausführungsbeispiels sowie anhand der Zeichnung. Dabei zeigen:
- Fig. 1: eine schematische Seitenansicht der erfindungsgemäßen Übergabevorrichtung in der ausgefahrenen Arbeitsstellung des Übergabeförderbandes,
- Fig. 2: eine Teilseitenansicht gemäß Fig. 1 in der abgesenkten Nichtgebrauchsstellung des Übergabeförderbandes, und
- Fig. 3: eine perspektivische Teilansicht der Übergabevorrichtung in Arbeitsstellung.

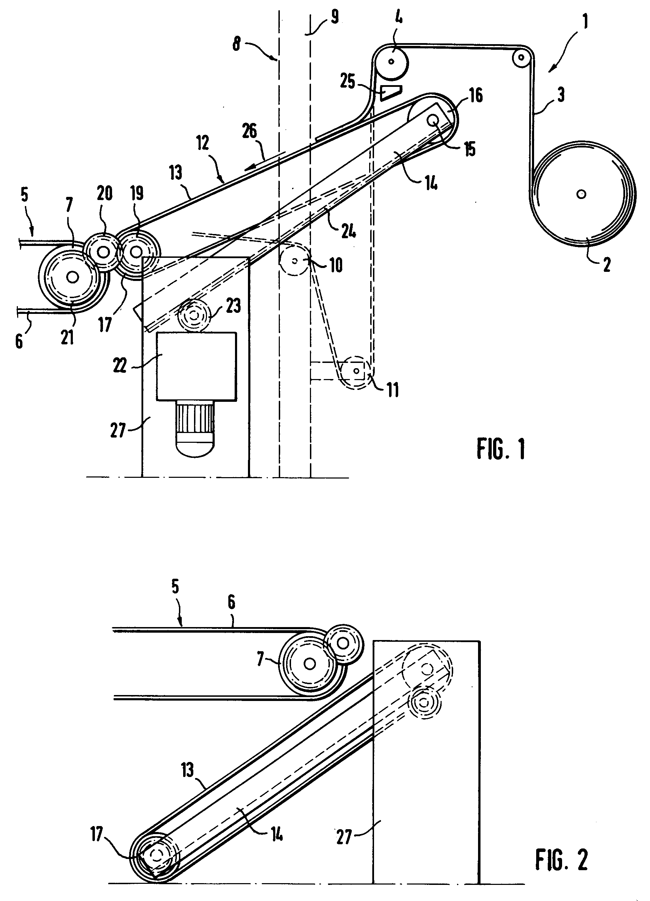

In Fig. 1 ist mit 1 die nur schematisch wiedergegebene Auswickelstation eines auf einer Rolle 2 in die Auswickelstation eingehängten Cordbandes 3 mit einer Ausgabewalze 4 bezeichnet, während 5 die Förderstation andeutet, von der in der Zeichnung nur der Anfang des Förderbandes 6 mit der vorderen Umlaufrolle 7 gezeigt ist. Das von der Rolle 2 abgewickelte Cordband 3 muß nun von der Auswickelstation 1 zur Vorschubstation 5 gefördert werden, wobei es in der Betriebsstellung durch eine in Fig. 1 schematisch gestrichelt eingezeichnete Bandspanneinrichtung 8 geführt ist, die neben seitlichen Säulen 9 Spannrollen 10 und 11 umfaßt. Die Spannrolle 11 kann dabei längs der Säulen 9 nach oben über die Ausgabewalze 4 angehoben und die zweite Spannwalze 10 nach unten verfahren werden, so daß im Raum zwischen der Auswickelstation 1 und der Vorschubstation 5 über die nachfolgend noch im einzelnen zu beschreibende Übergabestation 12 das Cordband 3 vollautomatisch von der Auswickelstation zur Vorschubstation übergeben werden kann. Anschließend werden dann die Spannwalzen 10 und 11 wieder in die in Fig. 1 angedeutete Arbeitsposition verfahren, in der das Cordband 3 eine Spannschlaufe bildet. Dies erfolgt allerdings selbstverständlich erst dann, wenn die Übergabeeinrichtung aus der in Fig. 1 gezeigten Arbeitsstellung in die in Fig. 2 gezeigte Nichtgebrauchsstellung zurückgefahren ist.

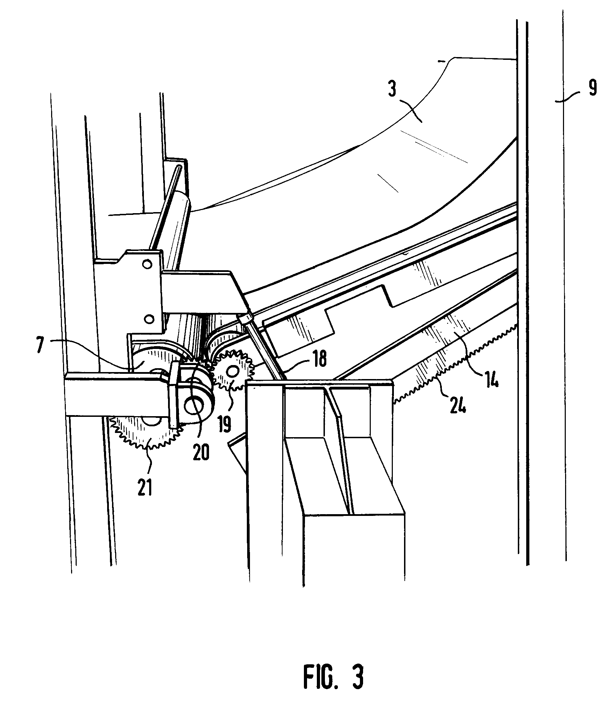

Die Übergabevorrichtung 12 umfaßt ein Förderband 13, das in einem Schieberahmen 14 um die Achse 15 der oberen Umlenkwalze 16 schwenkbar gelagert ist, derart, daß die untere Umlenkwalze 17 mit Hilfe von in Fig. 3 schematisch dargestellten hydraulischen Ausstellgliedern 18 in die in Fig. 1 und 3 gezeigte Übergabestellung zum Förderband 6 der Vorschubstation angehoben werden kann. Die Übergabevorrichtung umfaßt zwei seitliche Führungssäulen 27, in denen der Führungsrahmen 14 schräg verschiebbar geführt ist, so daß er aus der in Fig. 2 gezeigten Nichtgebrauchsstellung - die Führungen selbst sind der Übersichtlichkeit halber nicht mit eingezeichnet - nach oben parallel zu sich in die Stellung nach Fig. 1 oder 3 gebracht werden kann, wobei allerdings zunächst das Förderband 13 noch parallel zum Rahmen 14 unten eingeklappt ist. Erst mit dem vollständigen Ausschieben erfolgt das Ausschwenken des unteren Endes in die in den Figuren 1 und 3 gezeigte Betriebsstellung. Dabei gelangen vorzugsweise zwei auf den beiden Außenseiten der Umlenkwalze 17 angeordnete Zahnräder 19 in kämmenden Eingriff mit einem Zahnrad 20, welches in getrieblicher Verbindung mit einem Zahnrad 21 der Umlenkwalze 7 des Förderbandes 6 der Vorschubstation 5 steht. Der Antrieb des Übergabeförderbandes 13 wird also direkt vom Antrieb des Förderbandes der Vorschubstation abgeleitet, so daß auch die notwendige Synchronität gewährleistet ist.

Das Ausfahren des Übergabeförderbandes 13 mit seinem Schieberahmen 14 erfolgt mit Hilfe eines Elektromotors 22, der ein Zahnrad 23 antreibt, das seinerseits mit einer Zahnstange 24 am Schieberahmen 14 kämmt. Um ein Verkanten zu vermeiden, sind derartige Zahnstangen und Zahnräder beidseits vorgesehen, wobei die beiden Zahnräder 23 durch eine Welle miteinander verbunden sind, so daß nur ein Elektromotor 22 benötigt wird.

Unter der Ausgabewalze 4 erkennt man in Fig. 1 schematisch einen Detektor 25, der feststellt, ob das Band entgegen der in Fig. 1 gezeigten Stellung nicht versehentlich nach rechts unter die Walze eingezogen wird. In diesem Fall wird über den Detektor und eine nachgeordnete Abschaltvorrichtung der Antriebsmotor für die Auswickelstation 1 abgeschaltet, so daß bei weiterlaufendem Antrieb für das Übergabeförderband 13 dieses das falschherum eingezogene Band 3 wieder herauszieht und in der gezeigten Förderrichtung 26 zur Vorschubstation befördert.

## Patentansprüche

1. Vorrichtung zur automatischen Übergabe eines Bandes, insbesondere eines Cordbandes, von einer Auswickelstation zu einer ein Förderband umfassenden Vorschubstation, gekennzeichnet durch ein schräg verlaufendes Übergabeförderband (13), das aus einer unter die Vorschubstation (5) eingeschobenen Nichtgebrauchsstellung parallel zu seiner Förderrichtung nach oben unter die das Band (3) tragende Ausgabewalze (4) der Auswickelstation (1) verfahrbar und in dieser ausgefahrenen Stellung mit seinem unteren Ende nach oben in eine Übergabestellung zum Förderband (6) der Vorschubstation (5) schwenkbar ist.

2. Vorrichtung nach Anspruch 1, dadurch gekennzeichnet, daß mit der Verschwenkung des unteren Endes des Übergabeförderbandes (13) eine getriebliche Verbindung mit dem Antrieb des Förderbandes der Vorschubstation (5) erfolgt.

3. Vorrichtung nach Anspruch 2, dadurch gekennzeichnet, daß die untere Umlenkwalze (17) des Übergabeförderbandes (13) wenigstens ein Zahnrad (19) trägt, das beim Verschwenken des unteren Endes kämmend in ein mit dem Förderbandantrieb verbundenes Gegenzahnrad (20) eingreift.

4. Vorrichtung nach einem der Ansprüche 1 bis 3, dadurch gekennzeichnet, daß das Übergabeförderband (13) in einem zuwischen zwei seitlichen Säulen (27) verschiebbar geführten Schieberahmen (14) unterseitig ausschwenkbar gelagert ist.

5. Vorrichtung nach Anspruch 3, dadurch gekennzeichnet, daß das untere Ende des Übergabeförderbandes (13) durch pneumatische Stellglieder (18) aus der Ebene des Schieberahmens (14) ausschwenkbar ist.

6. Vorrichtung nach Anspruch 4 oder 5, dadurch gekennzeichnet, daß der Schieberahmen (14) wenigstens eine mit einem Abtriebszahnrad (23) eines in einer Säule (27) eingebauten Antriebsmotors (22) kämmende Zahnstange (24) aufweist.

7. Vorrichtung nach einem der Ansprüche 1 bis 6, dadurch gekennzeichnet, daß unter der Ausgabewalze (4) der Auswickelstation (1) ein einer Abschalteinrichtung für den Antrieb der Auswickelstation (1) zugeordneter Detektor für das Band (3) vorgesehen ist.
